# FASCICULE DE BREVET EUROPEEN

(11) **EP 1 268 239 B1**
(45) Date de publication et mention de la délivrance du brevet: **02.06.2004**
(21) Numéro de dépôt: 01915348.5
(22) Date de dépôt: 15.03.2001
(51) Int. Cl.: B60R 21/12

(54) **ACCESSOIRE POUR FLAP**
ZUSATZ FÜR WULSTBAND
FLAP ACCESSORY

(30) Priorité: 21.03.2000 FR 0003689
(43) Date de publication de la demande: 02.01.2003
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: GIRARD, Dominique, F-63119 Chateaugay (FR)
(74) Mandataire: Diernaz, Christian
(86) Numéro de dépôt international: PCT/EP2001/002941
(87) Numéro de publication internationale: WO 2001/070542

(56) Documents cités:
- FR-A- 2 177 645
- GB-A- 235 137
- US-A- 2 773 535
- US-A- 4 453 581

## Description

La présente invention concerne un accessoire pour flap, généralement utilisé avec un flap pour obstruer l'orifice de passage de valve prévu sur une jante de montage d'un pneumatique avec lequel ce flap est utilisé.

Les pneumatiques utilisés avec une chambre à air requièrent l'emploi d'un flap. Comme connu, un flap est un anneau de protection en élastomère disposé entre, d'un côté, la chambre à air et, de l'autre côté, le fond de gorge de la jante et les bourrelets du pneumatique. Le flap évite le pincement de la chambre à air entre la jante et les bourrelets; il protège la chambre à air du contact ou du frottement avec la jante. Ceci est particulièrement utile car une jante peut être portée à des températures élevées en cours de roulage compte tenu de la proximité du dispositif de freinage.

Un des problèmes posés par l'utilisation d'un flap résulte de son fluage à travers l'orifice de passage de valve existant sur la jante sous l'effet de la pression exercée par la chambre à air combinée à la chaleur provenant des freins; on constate en effet que dans ces conditions le flap se déforme progressivement au travers dudit orifice. Ce mécanisme induit en général un amincissement localisé du flap dans la zone de l'orifice de valve; il s'ensuit que la tige de valve, alors déplacée en direction de la jante, risque de venir frotter sur le tambour de frein avec les conséquences aisément imaginables.

Pour empêcher le flap de fluer dans l'orifice de passage de valve, le brevet FR 2 177 645, comportant les caractéristiques du préambule de la revendication 1, propose un ensemble de renforcement composé, d'une part, d'un insert rigide, par exemple en matière plastique, venant se loger dans l'orifice du flap destiné au passage de la valve et en formant la paroi interne et d'autre part, d'une couche de mélange d'élastomère renforcé formant revêtement de la surface radialement intérieure du flap tout autour dudit insert. L'insert rigide et la couche d'élastomère renforcé limitent le fluage du flap dans l'orifice de passage de valve de la jante; de plus, l'insert empêche un déplacement de la tige de valve en direction du tambour de frein. Toutefois, cette solution proposant l'utilisation d'une couche d'élastomère n'est pas satisfaisante lorsque les conditions d'utilisation du pneumatique pourvu de l'ensemble de renforcement conduisent à un échauffement du flap à des températures supérieures à 90°C - 100 °C, zone de températures où la couche d'élastomère est elle même soumise à une fluage. D'autre part, la réalisation puis la mise en place dudit ensemble sur son flap se révèlent être complexes puisque nécessitant de nombreuses étapes : moulage puis pose de l'insert, réalisation de la couche d'élastomère renforcé puis son collage sur le flap, par exemple au moyen d'une presse.

L'objectif de l'invention est de proposer un accessoire pour flap qui ne présente pas les inconvénients de l'état de la technique et qui en particulier permet de limiter voire annuler le fluage du flap dans l'orifice de passage de valve. L'accessoire pour flap, conforme à l'invention, est défini dans la revendication 1. L'accessoire selon l'invention est réalisé en une seule pièce avec un matériau moulable, thermiquement résistant, c'est-à-dire pouvant résister à des températures allant jusqu'à au moins 180 °C sans quasiment présenter de déformation de fluage avec le temps.

Cette bonne résistance à la température permet d'empêcher le flap de fluer dans le temps et évite que ledit flap ne vienne occuper au moins en partie l'orifice de passage de valve de la jante, cela même dans le cas où des températures élevées sont atteintes suite à des conditions de roulage particulièrement sévères, notamment des freinages répétitifs.

L'accessoire pour flap selon l'invention est de préférence en matière plastique et notamment en polyamide.

La base dudit accessoire se présente sous la forme d'une plaque de faible épaisseur destinée à être insérée entre le flap et la jante et ayant une surface telle que ladite plaque recouvre l'orifice de passage de la valve de la jante tout en débordant de chaque côté dudit orifice. Quant à l'insert cylindrique, il est destiné à être inséré de force dans l'orifice cylindrique de passage de valve prévu sur le flap, dont il forme la paroi intérieure tout en assurant la mise en contact de la plaque formant la base contre le flap ainsi que le maintien en place de ladite base quelles que soient les contraintes imposées respectivement au flap et à la jante. Par inséré en force, on entend que l'insert est introduit dans le flap en déformant élastiquement ledit flap de manière à créer des efforts radiaux dudit flap sur l'insert afin de rendre solidaire ce dernier dudit flap.

Avantageusement, le matériau constitutif de la base de l'accessoire doit conférer à ladite base une élasticité appropriée en flexion longitudinale pour que cette base se déforme et ainsi puisse suivre la forme arrondie du flap.

Dans une variante de réalisation, la base de l'accessoire, sur sa face destinée à être en contact avec un flap, est pourvue de nervures ou excroissances en relief la traversant sur toute la largeur de la base; ces nervures ou excroissances qui peuvent être ou non régulièrement espacées sont destinées à réduire voire empêcher le fluage du matériau constitutif du flap parallèlement à ladite base et à conférer à ladite base une plus grande rigidité en flexion autour d'un axe s'étendant sensiblement dans la direction perpendiculaire à la direction des nervures.

Afin de faciliter le passage de la tige de valve dans l'insert au moment du montage ou du démontage, l'accessoire pour flap selon l'invention est pourvu d'au moins une ouverture réalisée au voisinage de son raccordement avec la base et de dimensions appropriées.

L'invention qui vient d'être exposée sera mieux comprise à l'aide de la description et des figures suivantes ayant trait à un exemple non limitatif de réalisation.
- la figure 1 montre, vue de dessus, la face extérieure de l'accessoire destinée à venir en contact avec un flap ;
- la figure 2 représente une section transversale de l'accessoire montré à la figure 1 dans le sens de sa longueur suivant le plan de coupe II-II ;
- la figure 3 montre une section transversale de l'accessoire de la figure 1 suivant un plan de coupe III-III perpendiculaire au plan de coupe II-II.

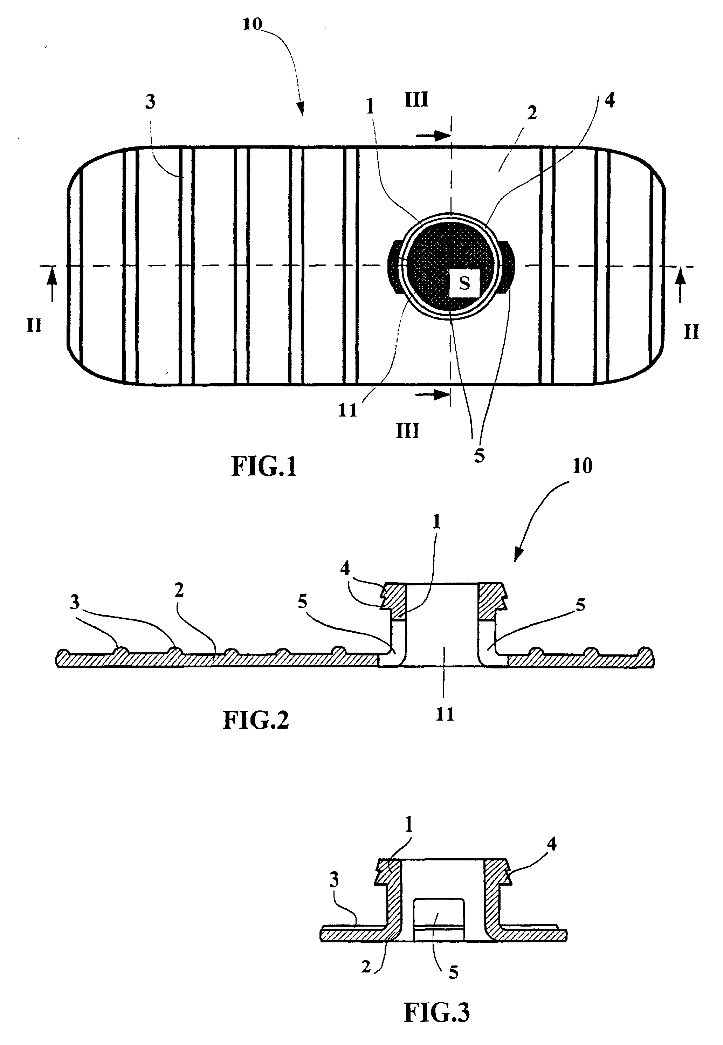

L'accessoire 10 représentée avec la figure 1 est de forme générale oblongue et est constitué d'un insert 1 et d'une base 2, l'ensemble insert et base formant une pièce unique moulée dans un matériau thermiquement résistant. La vue de la figure 1 représente une vue de la face de l'accessoire destinée à venir en contact avec la surface radialement interne d'un flap lorsque ce dernier est en place dans un pneumatique monté sur une jante.

Comme le montre la figure 1, la base 2 de l'accessoire 10 se présente sous la forme d'une plaque mince de forme rectangulaire prolongée, sur chacun de ses petits côtés, par deux demi-disques tronqués elle est, sensiblement de forme oblongue, afin que l'orifice de passage de valve sur la jante soit recouvert par l'accessoire. Préférentiellement, la surface de la base doit être telle qu'elle puisse recouvrir l'orifice de passage de valve de la jante en le débordant dans toutes les directions du plan de ladite base d'au moins 5 mm. La plaque formant la base 2 est percé d'un orifice 11 (représenté sur la figure 1 par la section hachurée repérée S) et porte l'insert 1 de forme cylindrique creuse disposé de manière à être dans le prolongement dudit orifice 11. L'insert 1 est solidaire de la base 2 et est décentré dans la longueur de la base, ceci afin de correspondre à la position de l'orifice de passage de valve prévu sur le flap dans lequel il est destiné à être inséré. L'insert 1 est par ailleurs centré dans le sens de la largeur de la base 2.

L'épaisseur de la plaque formant la base 2 est préférentiellement choisie entre 0,5 et 2,5 mm.

Tout comme pour le brevet FR 2 177 645 de l'art antérieur, la hauteur de l'insert, mesurée par rapport à la face de la base sur laquelle il fait saillie, est telle qu'en cas de fluage du flap en cours de roulage la partie de la valve reposant sur la couronne radialement extérieure de l'orifice de valve du flap, vienne s'appuyer sur la partie supérieure de l'insert et ne puisse pas être repoussée jusqu'à venir en contact du tambour de frein.

Dans l'exemple présenté, l'accessoire 10 est réalisé par moulage en polyamide (Nylon 66) assurant audit accessoire une résistance satisfaisante au fluage thermique jusqu'à une température de 190 °C. Toutefois, il n'y a pas de limite dans le choix du matériau dans la mesure où celui est moulable et permet d'assurer une bonne tenue dimensionnelle lorsqu'il est porté à des températures jusqu'à au moins 180°C et s'il confère à la base une élasticité de déformation appropriée pour pouvoir s'adapter à et suivre la géométrie du flap.

Sur la face de la base 2 destinée à venir en contact avec un flap (cette face correspond à la face sur laquelle fait saillie l'insert 1) des nervures rectilignes 3 sont moulées à intervalles réguliers sur la toute la largeur de ladite base de part et d'autre de la zone de l'insert. Ces nervures sont préférentiellement continues et d'une hauteur suffisante pour créer une sorte d'ancrage de la base dans le matériau constitutif du flap et ainsi réduire la déformation dudit flap dans une direction sensiblement parallèle à la base en particulier dès lors que ce flap est soumis à des conditions de températures sévères. Les nervures 3 ont, dans l'exemple décrit, la forme de demi-cylindres; Cette forme n'est bien sûr pas limitative.

Comme le montre la figure 2, représentant la coupe de l'accessoire 10 montré à la figure 1 selon la ligne II-II, l'insert 1 a la forme d'un cylindre légèrement évasé dans sa zone de raccordement à la base 2 et est muni dans sa partie la plus éloignée de ladite base 2 de plusieurs surépaisseurs 4 ayant la forme d'anneaux entourant complètement l'insert 1 sur sa face extérieure (correspondant à la face destinée à venir en contact avec le flap lors du montage de l'insert dans l'orifice de passage de valve prévu sur le flap). Le rôle de ces surépaisseurs 4 est, tout en permettant l'introduction de l'insert dans l'orifice prévu sur le flap, d'en empêcher toute sortie accidentelle non voulue. Il est judicieux de donner auxdites surépaisseurs une forme adaptée à cette fonction ; dans l'exemple choisi et vue en coupe comme représenté sur la figure 2, une forme générale en dents de scie a été choisie, l'épaisseur de chaque dent allant croissant en direction de la base 2. L'orifice 11 dans le prolongement de l'insert 1 permet le passage de la tige d'une valve. Pour faciliter le passage de cette tige des ouvertures 5 sont prévues sur l'insert 1.

Sur la coupe selon la ligne III-III de l'accessoire 10 montré à la figure 3, on distingue plus aisément les deux ouvertures 5 diamétralement disposées prévues sur l'insert 1 dans sa partie voisine du raccordement avec la base 2. Le rôle de ces ouvertures 5 est de faciliter la mise en place de la valve dans l'insert.

## Revendications

1. Accessoire (10) pour flap, ledit flap étant destiné à être interposé entre une chambre à air d'un pneumatique et une jante de montage dudit pneumatique, ladite jante comprenant un orifice de passage d'une tige de valve, cet accessoire (10) comprenant une base (2) de forme générale oblongue et dont la face destinée à être en contact avec le flap est pourvue d'un insert rigide (1) ayant la forme d'un cylindre creux, cet accessoire étant **caractérisé en ce qu'**il se présente sous forme d'une pièce moulée faite d'un matériau unique, moulable, résistant au fluage au moins jusqu'à une température de 180°C et **en ce que**, une fois l'accessoire en place dans le flap, la base (2) de forme générale oblongue recouvre l'orifice de passage de valve sur la jante afin d'éviter le fluage du flap dans ledit orifice.

2. Accessoire (10) pour flap selon la revendication 1, **caractérisé en ce que** la base (2) de forme générale oblongue, recouvrant l'orifice de passage de valve sur la jante,le déborde dans toutes les directions du plan de ladite base d'au moins 5 mm.

3. Accessoire (10) pour flap selon la revendication 1 ou la revendication 2, **caractérisé en ce que** son matériau constitutif est une matière plastique.

4. Accessoire (10) pour flap selon l'une des revendications 1 à 3, **caractérisé en ce que** la base (2) comporte plusieurs excroissances ou nervures (3) sur sa face destinée à être en contact avec le flap, lesdites excroissances ou nervures s'étendant transversalement par rapport à la plus grande dimension de la base (2) et sur la totalité de sa plus petite dimension.

5. Accessoire (10) pour flap selon l'une quelconque des revendications 1 à 4, **caractérisé en ce que** l'insert (1) présente, sur sa surface extérieure, des surépaisseurs (4) faisant relief pour permettre l'introduction de l'insert dans l'orifice prévu sur le flap et empêcher toute sortie non voulue dudit orifice.

6. Accessoire pour flap selon l'une quelconque des revendications 1 à 5 **caractérisé en ce que** l'insert (1) est pourvu d'au moins une ouverture (5) au voisinage de son raccordement avec la base (2) de dimensions appropriées pour faciliter le passage de la tige de valve dans l'insert.

## Patentansprüche

1. Zusatz (10) zu einem Wulstband, wobei das genannte Wulstband dazu bestimmt ist, zwischen einer Luftkammer eines Reifens und einer Montagefelge des genannten Reifens angeordnet zu werden, die genannte Felge eine Öffnung zum Durchlassen einer Ventilstange umfaßt, und dieser Zusatz (10) eine Basis (2) mit insgesamt länglicher Form umfaßt, von der die Fläche, die dazu bestimmt ist, mit dem Wulstband in Berührung zu gelangen, mit einem steifen Einsatz (1) versehen ist, der die Form eines Hohlzylinders aufweist, und wobei dieser Zusatz **dadurch gekennzeichnet ist, daß** er sich unter der Form eines abgeformten Teils darbietet, das aus einem einzigen Material gemacht ist, das abformbar ist und dem Kriechen mindestens bis zu einer Temperatur von 180°C widersteht, und daß, wenn der Zusatz erst einem in das Wulstband eingesetzt ist, die Basis (2) mit insgesamt länglicher Form die Öffnung des Ventildurchlasses auf der Felge abdeckt, um das Kriechen des Wulstbandes in die genannten Öffnung zu vermeiden.

2. Zusatz (10) für ein Wulstband nach Anspruch 1, **dadurch gekennzeichnet, daß** die Basis (2) mit insgesamt länglicher Form, die die Öffnung des Ventildurchlasses auf der Felge abdeckt, über sie in allen Richtungen der Ebene der genannten Basis um mindestens 5 mm hinausreicht.

3. Zusatz (10) für ein Wulstband nach Anspruch 1 oder Anspruch 2, **dadurch gekennzeichnet, daß** das Material, aus dem es besteht, ein Kunststoff ist.

4. Zusatz (10) für ein Wulstband nach einem der Ansprüche 1 bis 3, **dadurch gekennzeichnet, daß** die Basis (2) mehrere Ausstülpungen oder Rippen (3) auf seiner Fläche aufweist, die dazu bestimmt ist, in Berührung mit dem Wulstband zu stehen, wobei sich die genannten Ausstülpungen oder Rippen bezüglich der größten Abmessung der Basis (2) quer und über die Gesamtheit ihrer kleinsten Abmessung erstrecken.

5. Zusatz (10) für ein Wulstband nach einem der Ansprüche 1 bis 4, **dadurch gekennzeichnet, daß** der Einsatz (1) auf seiner Außenoberfläche Überdicken bzw. Vorsprünge (4) aufweist, die vorspringen, um das Einführen des Einsatzes in die Öffnung zu gestatten, die auf dem Wulstband vorgesehen ist, und um jeden unerwünschten Austritt aus der genannten Öffnung zu vermeiden.

6. Zusatz für ein Wulstband nach einem der Ansprüche 1 bis 5, **dadurch gekennzeichnet, daß** der Einsatz (1) mit mindestens einer Öffnung (5) mit geeigneten Abmessungen in der Nähe seiner Verbindung mit der Basis (2) versehen ist, um den Durchgang der Ventilstange in den Einsatz zu erleichtern.

## Claims

1. Accessory (10) for a flap, the said flap being designed to be interposed between a tyre inner tube and a mounting rim for the said tyre, the said rim comprising an orifice to allow the passage of a valve stem, the said accessory (10) comprising a base (2) of generally oblong shape whose face designed to be in contact with the flap is provided with a rigid insert (1) having the shape of a hollow cylinder, this accessory being **characterised in that** it is in the form of a moulded component made of a single, mouldable material that resists creep at least up to a temperature of 180°C, and **in that** once the accessory is in place in the flap, the base (2) of generally oblong shape covers the valve stem orifice in the rim so as to prevent creep of the flap into the said orifice.

2. Accessory (10) for a flap according to Claim 1, **characterised in that** the base (2) of generally oblong shape covering the valve passage orifice in the wheel rim extends in all directions beyond the orifice in the plane of the said base (2) by at least 5 mm.

3. Accessory (10) for a flap according to Claims 1 or 2, **characterised in that** the material of which it consists is a plastic material.

4. Accessory (10) for a flap according to any of Claims 1 to 3, **characterised in that** the base (2) comprises several projection or ribs (3) on its face intended to be in contact with the flap, the said projections or ribs extending transversely relative to the major dimension of the base (2) and across the whole of its minor dimension.

5. Accessory (10) for a flap according to any of Claims 1 to 4, **characterised in that** the insert (1) has on its outside surface thickened portions (4) shaped to permit the insert to be introduced into the orifice provided in the flap and to prevent its unintentional emergence from the said orifice.

6. Accessory for a flap according to any of Claims 1 to 5, **characterised in that** the insert (1) is provided with at least one opening (5) in the area of its connection to the base (2), of dimensions appropriate to facilitate the passage of the valve stem into the insert.
